(19) **Europäisches Patentamt**

**European Patent Office**

**Office européen des brevets**

(11) Numéro de publication : **0 452 878 B1**

(12) **FASCICULE DE BREVET EUROPEEN**

(45) Date de publication du fascicule du brevet :
04.01.95 Bulletin 95/01

(51) Int. Cl.⁶ : **H04J 3/04, H04L 7/00**

(21) Numéro de dépôt : **91106045.7**

(22) Date de dépôt : **16.04.91**

(54) **Circuit de multiplexage de signaux d'horloge.**

(30) Priorité : **18.04.90 FR 9004926**

(43) Date de publication de la demande :
**23.10.91 Bulletin 91/43**

(45) Mention de la délivrance du brevet :
**04.01.95 Bulletin 95/01**

(84) Etats contractants désignés :
**AT BE CH DE DK ES FR GB GR IT LI LU NL SE**

(56) Documents cités :
**EP-A- 0 254 406**
**US-A- 4 538 272**
**US-A- 4 899 351**

(73) Titulaire : **ALCATEL MOBILE
COMMUNICATION FRANCE
15, rue de la Baume
F-75008 Paris (FR)**

(72) Inventeur : **Andrieu, Vianney
3, rue d'Alleray
F-75015 Paris (FR)**

(74) Mandataire : **Weinmiller, Jürgen et al
Lennéstrasse 9
Postfach 24
D-82336 Feldafing (DE)**

EP 0 452 878 B1

## Description

La présente invention concerne un circuit de multiplexage de signaux d'horloge, le signal de sortie de ce circuit étant le signal d'horloge identifié par un signal de sélection.

Dans les équipements électroniques pourvus de plusieurs horloges, il est parfois prévu d'utiliser successivement un certain nombre de ces horloges pour un même composant afin, par exemple, de diminuer sa consommation d'énergie ou de synchroniser son fonctionnement avec celui d'autres composants. Il est donc nécessaire d'avoir recours à un circuit de multiplexage de signaux d'horloges dont le signal de sortie réponde aux spécifications habituelles en la matière, à savoir, notamment, une durée minimale pour chacun des niveau haut et bas.

Les multiplexeurs de type connu dont le signal de sortie est commuté d'un premier à un deuxième signal d'entrée dès que le signal de sélection le signifie ne permettent pas de satisfaire à cette condition. En effet, la commutation peut intervenir dans une période inférieure à celle spécifiée après un changement de niveau du premier signal d'entrée. Elle peut également intervenir dans une période inférieure à celle spécifiée avant un changement de niveau du deuxième signal d'entrée.

Il est maintenant connu par le brevet US 4 899 351 et par la demande de brevet EP 0 254 406 de prévoir des moyens pour faire en sorte que le signal de sortie respecte ces contraintes de durée minimale. Cependant la commutation d'un premier à un second signal d'entrée se fait avec un retard relativement important. De plus, dans ces deux documents, les dispositifs décrits sont mal adaptés au cas où le nombre de signaux d'entrée est supérieur à deux du fait de leur mode de commande.

La présente invention a ainsi pour objet un circuit de multiplexage de signaux d'horloges dans lequel le temps de commutation séparant la demande de commutation véhiculée par le signal de sélection de la commutation effective sur le deuxième signal d'entrée dépend uniquement des fréquences des premier et deuxième signaux d'entrée et est minimisé compte-tenu de ces contraintes de durée.

L'invention s'applique quel que soit le nombre d'horloges, ces horloges n'ayant , à priori, de relation de phase ou de fréquence ni entre elles, ni avec le signal de sélection.

Le circuit de multiplexage de signaux d'horloge selon l'invention est commandé par un signal de sélection au moins. Il est caractérisé en ce que un niveau de commutation invariable étant l'un des deux niveaux de ces signaux d'horloge, il comprend, pour chaque signal d'horloge, un module de temporisation produisant un signal d'horloge retardé prenant la valeur de ce signal d'horloge pour un premier état d'un signal de sélection en l'absence d'un signal d'occupation dès qu'un niveau de commutation de ce signal d'horloge apparaît et interrompant ce signal d'horloge retardé quand ledit signal de sélection est dans un deuxième état dès qu'un niveau de commutation de ce signal d'horloge apparaît, des moyens de commande produisant le signal d'occupation dès qu'un module de temporisation produit un signal d'horloge retardé, et des moyens pour produire comme signal de sortie le signal d'horloge retardé issu du module de temporisation sélectionné.

De plus, dans le circuit de multiplexage de signaux d'horloge, un signal de sélection est associé à chacun des signaux d'horloge.

En outre, dans le circuit de multiplexage de signaux d'horloge, chaque module de temporisation émettant un signal de fonctionnement en même temps qu'il produit un signal d'horloge retardé, les moyens de commande produisent le signal d'occupation si un signal de fonctionnement est présent.

Dans un premier mode de réalisation du circuit de multiplexage de signaux d'horloge, le niveau de commutation étant le niveau bas, chacun des modules de temporisation comprend une bascule de type D produisant simultanément un signal de fonctionnement à l'état logique un, et ledit signal d'horloge retardé, celui-ci étant le produit logique du signal de fonctionnement et du signal d'horloge, l'entrée de synchronisation de la bascule recevant le complément du signal d'horloge, l'entrée de donnée de cette bascule recevant un signal de commande dont le niveau est à un si le signal de sélection est présent et si le signal de fonctionnement ou le complément du signal d'occupation sont au niveau un.

Par exemple, dans le circuit de multiplexage de signaux d'horloge, les moyens de commande comprennent une porte "OU" recevant tous les signaux de fonctionnement pour produire le signal d'occupation.

Avantageusement, dans le circuit de multiplexage de signaux d'horloge, chaque module de temporisation comprend une porte "ET" recevant le signal de sélection et un signal de validation pour produire le signal de commande et comprend de plus une porte "OU" recevant le signal de fonctionnement et le complément du signal d'occupation pour produire ce signal de validation.

Dans un deuxième mode de réalisation du circuit de multiplexage de signaux d'horloge, le niveau de commutation étant le niveau haut, chacun des modules de temporisation comprend une bascule de type D produisant simultanément le signal de fonctionnement à l'état logique zéro et le signal d'horloge retardé, celui-ci étant la somme logique du signal d'horloge et du signal de fonctionnement, l'entrée de synchronisation de la bascule recevant ledit signal d'horloge, l'entrée de donnée de cette bascule recevant un signal de commande dont le niveau est à un si le signal de sélection est à zéro ou si le signal de fonctionnement et le signal d'occupation sont à un.

Par exemple, dans le circuit de multiplexage de signaux d'horloge, les moyens de commande comprennent une porte "NON ET" recevant tous les signaux de fonctionnement pour produire le signal d'occupation.

Avantageusement, dans le circuit de multiplexage de signaux d'horloge, chaque module de temporisation comprend une porte "NON ET" recevant le signal de sélection et un signal de validation pour produire le signal de commande et comprend des plus une autre porte "NON ET" recevant le signal de fonctionnement et le signal d'occupation pour produire le signal de validation.

Les différents objets et caractéristiques de l'invention ressortiront avec plus de précision dans le cadre de la description d'exemples de réalisation donnés à titre non limitatif en se référant aux figures annexées qui représentent :

- La figure 1, un diagramme par blocs du circuit de multiplexage de signaux d'horloge selon l'invention,
- La figure 2, un schéma d'un module de temporisation du circuit de l'invention selon un premier mode de réalisation
- La figure 3, un schéma d'un module de temporisation du circuit de l'invention selon un deuxième mode de réalisation,
- La figure 4, un schéma d'un module de concentration du circuit de l'invention selon ce deuxième mode de réalisation.
- La figure 5, un chronogramme décrivant le fonctionnement d'un circuit de multiplexage de trois signaux d'horloge selon l'invention.

Un signal d'horloge est un signal périodique dont les deux états seront dénommés niveau travail et niveau repos. Le niveau repos correspond au signal qu'il faut appliquer sur l'entrée d'horloge d'un composant en l'absence de signal d'horloge.

Le circuit de multiplexage de signaux d'horloge s'applique aussi bien lorsque le niveau travail de ces signaux est le niveau haut et le niveau repos le niveau bas, que dans le cas contraire. Il s'applique également quel que soit le support de l'information qui identifie le signal d'horloge à transmettre. Dans la solution qui a été retenue pour la suite de la description, il s'agit d'un ensemble de signaux de sélection associés chacun à un signal d'horloge respectif, étant entendu qu'un seul signal de sélection est présent à un instant donné.

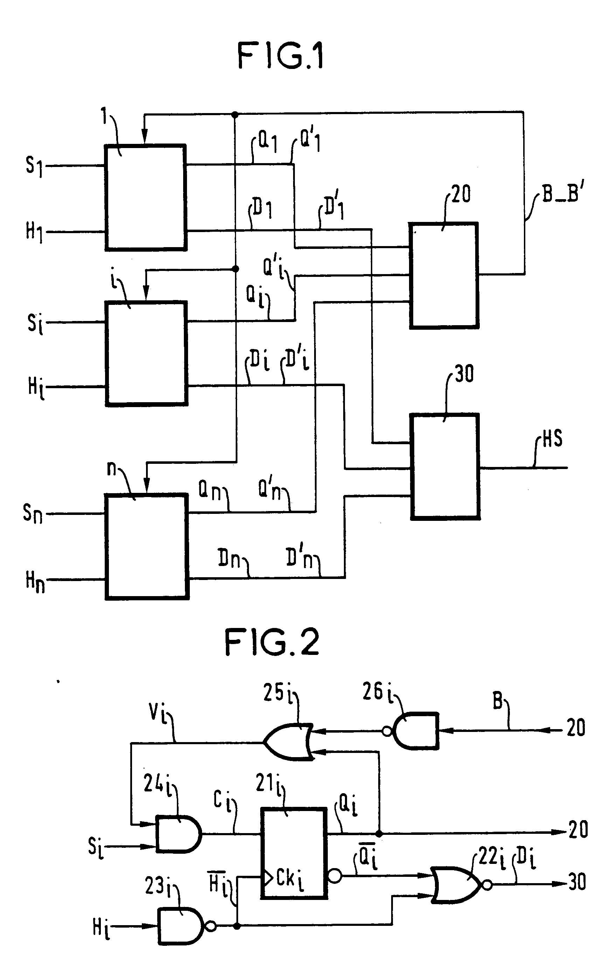

Le circuit de multiplexage représenté dans la figure 1 est prévu pour recevoir un nombre n de signaux d'horloge $H_1,...,H_i,..., H_n$ associés chacun à un signal de sélection $S_1,...,S_i,...,S_n$ où l'indice i est un entier compris entre 1 et n. Il comprend un nombre n de modules de temporisation 1, i, n recevant chacun un signal d'horloge $H_i$ et produisant un signal d'horloge retardé $D_i$ et un signal de fonctionnement $Q_i$ dérivant tous deux de l'état du signal de sélection $S_i$ correspondant et d'un signal d'occupation B. Un seul de ces modules est en fonctionnement à un instant donné. Le signal d'occupation B est élaboré par un module de commande 20 lorsque l'un des signaux de fonctionnement $Q_1,...,Q_i,...,Q_n$ est présent.

Le circuit de multiplexage comprend également un module de concentration 30 qui produit comme signal de sortie HS la réunion de tous les signaux d'horloge retardés $D_1,...,D_i,...D_n$.

Dans un premier mode de réalisation qui sera maintenant exposé, les signaux d'horloge $H_i$ sont tels que le niveau travail est le niveau haut ou 1 et que le niveau repos est le niveau bas ou 0.

Le module de temporisation i, identique à tous les autres, est représenté dans la figure 2. Il comprend une bascule $21_i$ qui produit un signal de fonctionnement $Q_i$ dont la valeur est celle qu'avait le signal de commande $C_i$ appliqué sur son entrée de donnée lors de la précédente transition du niveau bas au niveau haut du signal appliqué sur son entrée d'horloge $Ck_i$. Elle produit également un signal de fonctionnement complémentaire $\overline{Q_i}$, qui est le complément du signal de fonctionnement $Q_i$. Lorsque le signal de fonctionnement $Q_i$ est présent, c'est-à-dire de niveau 1, le signal d'horloge retardé $D_i$ prend la valeur du signal d'horloge $H_i$. Le résultat est obtenu, en se référant à la figure 2, par l'emploi d'une porte "NON OU" $22_i$ qui reçoit le signal de fonctionnement complémentaire $\overline{Q_i}$ et le signal d'horloge inversé $\overline{H_i}$ au moyen d'un inverseur $23_i$ qui produit ce signal d'horloge retardé $D_i$ :

$$D_i = \overline{\overline{Q_i} + \overline{H_i}} = Q_i.H_i \quad (1)$$

Les éléments sont prévus pour que le temps de propagation du signal d'horloge complémentaire $\overline{H_i}$ de la sortie de l'inverseur $23_i$ à l'entrée de la porte "NON OU" $22_i$ soit inférieur au temps qui sépare un changement d'état du signal de fonctionnement complémentaire $\overline{Q_i}$ au niveau de cette même porte de la transition du signal d'horloge complémentaire $\overline{H_i}$ au niveau de la sortie de l'inverseur $23_i$ qui a provoqué ce changement d'état. Dans le cas contraire il apparaîtrait en effet un passage au niveau 1 du signal d'horloge retardé $D_i$ indésirable d'une durée équivalente à la différence des deux de temps de propagation ci-dessus précisé. Le résultat est obtenu, par exemple, en disposant la bascule $21_i$ et la porte "NON OU" $22_i$ à proximité l'une de l'autre.

Le module de commande 20 qui n'apparait pas dans cette figure produit le signal d'occupation si un seul des signaux de fonctionnement est présent. Ce sera, par exemple, une porte "OU"

$$B = \sum_{k=1}^{n} Q_k \quad (2)$$

Le signal de commande $C_i$ qui valide la transmission du signal d'horloge $H_i$ doit être présent, ou de niveau 1, si le signal de sélection est présent ($S_i = 1$). Il faut, de plus, que le module soit déjà en fonctionnement ($Q_i = 1$) ou que le signal d'occupation soit absent ($B = 0$). Ces conditions peuvent se traduire par l'équation logique suivante :

$$C_i = S_i . (Q_i + \overline{B}) \quad (3)$$

Ce résultat est obtenu au moyen d'une porte "ET" $24_i$ qui produit le signal de commande $C_i$ à partir du signal de sélection $S_i$ et d'un signal de validation $V_i$. Le signal de validation Vi provient d'une porte "OU" $25_i$ qui reçoit le signal de fonctionnement $Q_i$ et le signal d'occupation B inversé au moyen d'un inverseur $26_i$.

Le module de concentration 30, qui n'apparaît pas dans la figure 2, produit comme signal de sortie l'un quelconque des signaux d'horloge retardés $D_1$,..., $D_i$,...$D_n$, deux de ces signaux ne pouvant être présents simultanément. Il s'agit par exemple d'une porte "OU" :

$$HS = \sum_{k=1}^{n} D_k \quad (4)$$

Le choix des opérateurs logiques utilisés dans les différents organes du circuit de multiplexage sont donnés à titre d'exemple. Ce choix peut être différent, pourvu qu'il permette d'obtenir les résultats donnés dans les quatre équations logiques ((1), (2), (3), (4)) qui précèdent.

Le fonctionnement du circuit de multiplexage sera maintenant explicité. L'hypothèse sera faite, dans un premier temps, qu'aucun signal de sélection n'est présent. Tous les signaux de fonctionnement $Q_i$ sont donc à zéro ce qui produit un signal de sortie HS à zéro également, le signal d'occupation B étant lui aussi à zéro.

Lors de l'apparition d'un signal $S_i$ ($S_i = 1$), le signal de commande $C_i$ du module de temporisation correspondant passe de zéro à un. Lorsque le signal d'horloge $H_i$ passe de un à zéro, le signal d'horloge complémentaire $\overline{H}_i$ déclenche le passage à un du signal de fonctionnement $Q_i$.

De ce fait le signal d'occupation B passe à un et aucun autre module de synchronisation ne peut donc être en fonctionnement.

Il sera convenu d'appeler période de sélection, la période durant laquelle le signal de fonctionnement $Q_i$ est au niveau 1.

Pendant cette période, le signal d'horloge retardé $D_i$ prend la valeur du signal d'horloge $H_i$ qui est au niveau zéro. Ainsi, le signal de sortie HS qui est alors égal à $D_i$ reste au niveau zéro pendant la même durée que le signal d'horloge $H_i$. Cette première commutation déclenchée par l'apparition d'un signal de sélection $S_i$ respecte donc bien la condition de durée minimale du niveau bas.

Une fois que le signal de sélection $S_i$ est passé à

zéro, le signal de fonctionnement $Q_i$ passe à zéro lors de la prochaine transition de un à zéro du signal d'horloge $H_i$. C'est à ce moment seulement, lorsque le signal d'horloge $H_i$ et par conséquent le signal de sortie HS sont à zéro que le signal de fonctionnement $Q_i$ et le signal d'occupation passent à zéro. Ainsi l'hypothèse de départ précisant que le signal de sortie HS est à zéro lorsque le signal d'occupation est à zéro est bien vérifiée. La condition de durée minimale tant sur le niveau haut que sur le niveau bas supposée vérifiée sur le signal d'horloge $H_i$ l'est donc également sur le signal de sortie HS.

Si un signal de sélection $S_j$ distinct du précédent $S_i$ apparait entre le passage à zéro du signal de sélection $S_i$ et le passage à zéro du signal d'occupation B, il ne sera pas pris en compte par le module de temporisation j correspondant car le signal de commande $C_j$ restera à zéro tant que le signal d'occupation B sera à un. Le signal de commande $C_j$ passera à un lorsque le signal de sortie HS sera à zéro, ce qui ramène à l'étude précédente. L'intervalle de temps de commutation qui sépare le passage à un du signal de sélection $S_j$ du passage à un du signal d'horloge retardé $D_j$ vaut au minimum une durée de niveau bas du signal d'horloge $H_j$ et au maximum la somme de deux durées de niveau bas et d'une durée de niveau haut de ce même signal et d'une période du signal d'horloge Hi, si le passage à zéro du signal de sélection $S_i$ et le passage à un du signal de sélection $S_j$ sont quasi-simultanés. Cet intervalle de temps prend ainsi une faible valeur qui ne dépend que des signaux d'horloge entre lesquels à lieu la commutation.

Dans un deuxième mode de réalisation dont la description suit, les signaux d'horloge $H_i$ sont tels que le niveau travail est le niveau bas ou 0 et le niveau repos est le niveau haut ou 1.

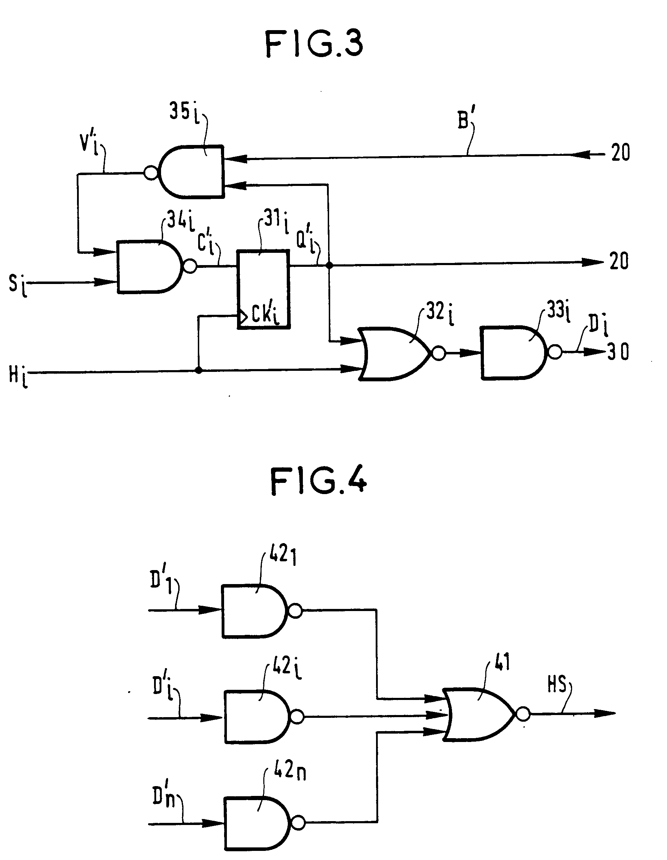

Le module de temporisation i, identique à tous les autres est représenté dans la figure 3. Il comprend une bascule $31_i$, identique à la bascule $21_i$ précédemment décrite, qui produit un signal de fonctionnement $Q'_i$ dont la valeur est celle qu'avait le signal de commande $C'_i$ appliqué sur son entrée de données lors de la précédente transition du niveau bas au niveau haut du signal appliqué sur son entrée d'horloge $C'k_i$. Lorsque le signal de fonctionnement $Q'_i$ est à zéro, le signal d'horloge retardé $D'_i$ prend la valeur du signal d'horloge $H_i$. Le résultat est obtenu, en se référant à la figure 3, par l'emploi d'une porte "NON OU" $32_i$ qui reçoit le signal de fonctionnement $Q'_i$ et le signal d'horloge $H_i$ suivie d'un inverseur $33_i$ qui produit ce signal d'horloge retardé $D'_i$ :

$$D'_i = \overline{Q'_i + H_i} = Q'_i + H_i \quad (1')$$

La remarque relative aux temps de propagation de l'entrée de synchronisation $Ck'_i$ ($Ck_i$) aux entrées de la porte "NON OU" $32_i$ ($22_i$) faite dans le cas précédent s'applique ici.

Le module de commande 20 qui n'apparait pas dans cette figure, produit le signal d'occupation B qui est à un si l'un des signaux de fonctionnement $Q'_i$ est à zéro.

Il s'agit par exemple, d'une porte "NON ET"

$$B' = \overline{\prod_{k=1}^{n} Q'_k} = \sum_{k=1}^{n} \overline{Q'_k} \quad (2')$$

Le signal de commande $C'_i$ qui valide la transmission du signal d'horloge $H_i$ doit être de niveau 0 si le signal de sélection $S_i$ est présent ($S_i = 1$). Il faut de plus que le module soit déjà en fonctionnement ($Q'_i=0$) ou que le signal d'occupation précise qu'aucun des modules de temporisation n'est en fonctionnement ($B'=0$)

$$\overline{C'_i} = S_i . (\overline{B' + \overline{Q'_i}})$$
$$C'_i = \overline{S_i} + (\overline{B' + \overline{Q'_i}})$$
$$C'_i = S_i + B'.Q'_i \quad (3')$$

Ce résultat est obtenu au moyen d'une porte "NON ET" $34_i$ qui produit le signal de commande $C'_i$ à partir du signal de sélection $S_i$ et d'un signal de validation $V'_i$. Le signal de validation $V'_i$ est produit par une porte "NON ET" $35_i$ qui reçoit le signal d'occupation $B'$ et le signal de fonctionnement $Q'_i$.

Le module de concentration 30 qui apparait dans la figure 4 produit comme signal de sortie HS l'un quelconque des signaux retardés $D'_1,...,D'_i,...,D'_n$, deux de ces signaux ne pouvant être présents simultanément.

Il s'agit, par exemple, d'une porte "NON OU" 41 recevant par l'intermédiaire d'un inverseur $42_1,...,$ $42_i,..., 42_n$ chacun des signaux d'horloge retardés $D'_1,$ $D'_i,..., D'_n$.

$$HS = \sum_{k=1}^{n} \overline{D'_i}$$
$$HS = \prod_{k=1}^{n} D'_i \quad (4')$$

Le choix des opérateurs logiques utilisés dans les différents organes du circuit de multiplexage sont donnés à titre d'exemple. Ils ont été choisis ici de type complémentaire ce qui correspond généralement aux applications industrielles. On remarquera, de plus que l'inverseur $33_i$ du module de temporisation $i$ et que l'inverseur $42_i$ du module de concentration étant disposés l'un derrière l'autre, ont des effets qui s'annulent. Ils seront donc avantageusement supprimés dans le cadre d'une réalisation pratique. Ils ont été introduits de manière à rendre la description de l'invention plus cohérente.

Le choix des opérateurs logiques peut donc être différent pourvu qu'il permette d'obtenir les résultats donnés dans les quatre équations logiques ((1'), (2'),

(3'), (4')) qui précèdent.

Le fonctionnement du circuit de multiplexage sera maintenant explicité. L'hypothèse sera faite, dans un premier temps, qu'aucun signal de sélection n'est présent. Tous les signaux de fonctionnement $Q'_i$ sont donc à un si, auparavant, chaque entrée de synchronisation $Ck'_1, ...,Ck'_i,..., Ck'_n$ a reçu un signal passant du niveau bas au niveau haut, ce qui produit un signal de sortie HS à un également, le signal d'occupation $B'$ étant lui à zéro. Lors de l'apparition d'un signal de sélection $S_i$ ($S_i = 1$), le signal de commande $C'_i$ passe de un à zéro. Lorsque le signal d'horloge $H_i$ passe de zéro à un le signal de fonctionnement $Q'_i$ passe de un à zéro. De ce fait le signal d'occupation $B'$ passe de zéro à un.

Il sera ici convenu d'appeler période de sélection, la période durant laquelle le signal de fonctionnement $Q'_i$ est au niveau zéro.

Pendant cette période, le signal d'horloge retardé $D'_i$ prend la valeur du signal d'horloge $H_i$ qui est au niveau un. Ainsi le signal de sortie HS qui est alors égal à $D'_i$ reste au niveau un pendant la même durée que le signal $H_i$. Cette première commutation déclenchée par l'apparition d'un signal de sélection $S_i$ respecte donc bien la condition de durée minimale du niveau haut.

Une fois que le signal de sélection $S_i$ est passé à zéro, le signal de fonctionnement $Q'_i$ passe à un lors de la prochaine transition de zéro à un du signal d'horloge $H_i$. C'est à ce moment seulement, lorsque le signal d'horloge $H_i$ et par conséquent le signal de sortie HS sont à un que le signal de fonctionnement $Q'_i$ passe à un et que le signal d'occupation passe a zéro. Ainsi l'hypothèse de départ précisant que le signal de sortie HS est à un lorsque le signal d'occupation est à zéro est bien vérifiée. La condition de durée minimale tant sur le niveau haut que sur le niveau bas supposée vérifiée sur le signal d'horloge $H_i$, l'est donc également sur le signal de sortie HS.

Si un signal de sélection $S_j$, distinct du précédent $S_i$ apparaît entre le passage à zéro du signal de sélection $S_i$ et le passage à zéro du signal d'occupation $B'$, il ne sera pas pris en compte par le module de temporisation $j$ correspondant car le signal de commande $C'_j$ restera à un tant que le signal d'occupation sera à un. Le signal de commande $C'_j$ passera à zéro lorsque le signal de sortie HS sera à un, ce qui ramène à l'étude précédente. L'intervalle de temps qui sépare le passage à un du signal de sélection $S_j$ du passage à zéro du signal d'horloge retardé $D'_j$ vaut au minimum une durée de niveau haut du signal d'horloge $H_j$ et au maximum la somme de deux durées de niveau haut, d'une durée de niveau bas de ce même signal et d'une période du signal d'horloge $H_i$, si le passage à zéro du signal de sélection $S_i$ et le passage à un du signal de sélection $S_j$ sont quasi simultanés. Cet intervalle de temps prend ainsi une faible valeur qui ne dépend que des signaux d'horloge entre lesquels a lieu la commutation.

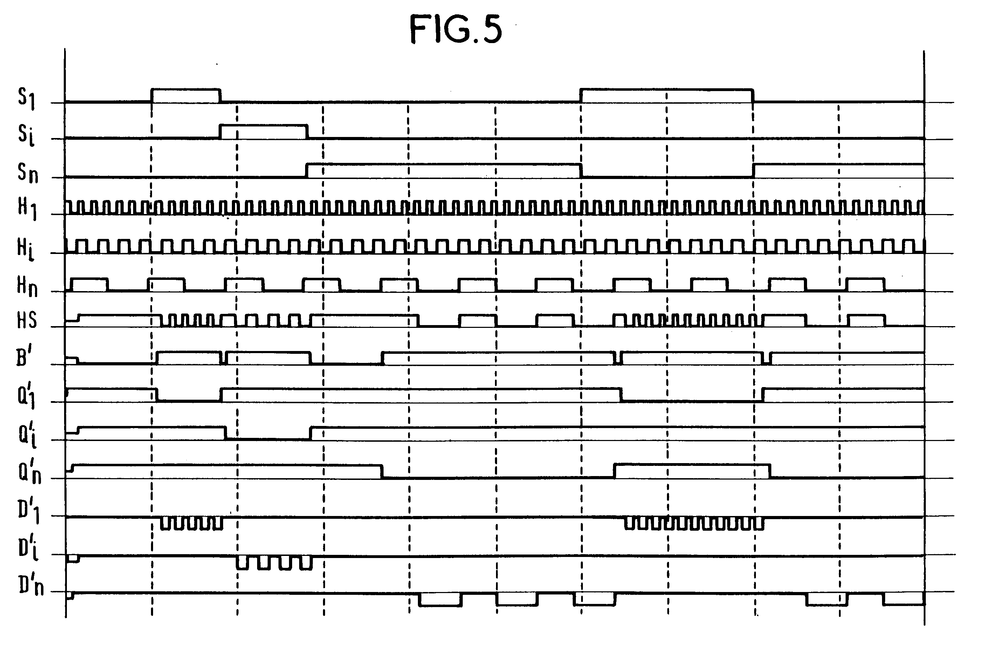

Un chronogramme représentant le fonctionnement du circuit de multiplexage dans le cas de trois signaux d'horloge $H_1$, $H_i$, $H_n$ est présenté à la figure 5.

L'invention permet ainsi de réaliser un circuit de multiplexage de signaux d'horloge respectant les contraintes de durée minimale de niveau haut et de niveau bas que le niveau de repos soit le niveau bas ou le niveau haut.

Dans les deux modes de réalisation précédents, le circuit de multiplexage sélectione un signal d'horloge au moment de l'apparition d'un niveau repos de celui-ci et cesse de la transmettre également à l'apparition d'un niveau repos. Ce niveau repos peut donc être qualifié de niveau de commutation.

Sans sortir du cadre de l'invention, le circuit de multiplexage pourrait de même sélectionner un signal d'horloge au moment de l'appariton d'un niveau travail de celui-ci et cesser de la transmettre également à l'apparition d'un niveau travail sous réserve que le signal de sortie soit maintenu au niveau travail lorsqu'aucun signal d'horloge n'est transmis. Ainsi le niveau de commutation peut tout aussi bien être le niveau travail.

## Revendications

1. Circuit de multiplexage de signaux d'horloge commandé par un signal de sélection au moins, ayant un niveau de commutation invariable qui est l'un des deux niveaux de ces signaux d'horloge, qui comprend pour chaque signal d'horloge ($H_1$, $H_i$, $H_n$) un module de temporisation (1, i, n) produisant un signal d'horloge retardé ($D_1$, $D_i$, $D_n$) prenant la valeur de ce signal d'horloge pour un premier état d'un signal de sélection ($S_1$, $S_i$, $S_n$) et en l'absence d'un signal d'occupation (B, B') dès qu'un niveau de commutation dudit signal d'horloge apparaît et interrompant ledit signal d'horloge retardé quand ledit signal de sélection est dans un deuxième état dès qu'un niveau de commutation dudit signal d'horloge apparaît, des moyens de commande (20) produisant ledit signal d'occupation (B, B') dès qu'un module de temporisation produit un signal d'horloge retardé, et des moyens pour produire comme signal de sortie (HS) le signal d'horloge retardé ($D_1$, $D_i$, $D_n$) issu du module de temporisation sélectionné.

2. Circuit de multiplexage de signaux d'horloge selon la revendication 1, caractérisé en ce qu'un signal de sélection ($S_1$, $S_i$, $S_n$) est associé à chacun desdits signaux d'horloge ($H_1$, $H_i$, $H_n$).

3. Circuit de multiplexage de signaux d'horloge, selon la revendication 1 ou 2 caractérisé en ce que, chaque module de temporisation émettant un signal de fonctionnement ($Q_1$, $Q_i$, $Q_n$) en même temps qu'il produit ledit signal d'horloge retardé ($D_1$, $D_i$, $D_n$), lesdits moyens de commande produisent ledit signal d'occupation (B, B') si un dit signal de fonctionnement est présent.

4. Circuit de multiplexage de signaux d'horloge selon l'une quelconque des revendications précédentes, caractérisé en ce que ledit niveau de commutation étant le niveau bas, chacun desdits modules de temporisation (1, i, n) comprend une bascule de type D ($21_1$, $21_i$, $21_n$) produisant ledit signal de fonctionnement ($Q_1$, $Q_i$, $Q_n$) à l'état logique un et ledit signal d'horloge retardé, celui-ci étant le produit logique dudit signal de fonctionnement ($Q_1$, $Q_i$, $Q_n$) et dudit signal d'horloge ($H_1$, $H_i$, $H_n$), l'entrée de synchronisation ($Ck_1$, $Ck_i$, $Ck_n$) de ladite bascule recevant le complément dudit signal d'horloge, l'entrée de donnée de ladite bascule recevant un signal de commande ($C_1$, $C_i$, $C_n$) dont le niveau est à un si ledit signal de sélection ($S_1$, $S_i$, $S_n$) est présent et si ledit signal de fonctionnement ou de complément dudit signal d'occupation sont au niveau un.

5. Circuit de multiplexage de signaux d'horloge selon la revendication précédente, caractérisé en ce que lesdits moyens de commande (20) comprennent une porte "OU" recevant tous lesdits signaux de fonctionnement ($Q_1$, $Q_i$, $Q_n$) pour produire ledit signal d'occupation (B).

6. Circuit de multiplexage de signaux d'horloge selon la revendication 4 ou 5 caractérisé en ce que ledit module de temporisation (i) comprend une porte "ET" ($24_i$) recevant ledit signal de sélection ($S_i$) et un signal de validation ($V_i$) pour produire ledit signal de commande ($C_i$) et comprend de plus une porte "OU" ($25_i$) recevant ledit signal de fonctionnement ($Q_i$) et le complément dudit signal d'occupation (B) pour produire ledit signal de validation.

7. Circuit de multiplexage de signaux d'horloge selon l'une quelconque des revendications 1 à 3, caractérisé en ce que ledit niveau de commutation étant le niveau haut, chacun desdits modules de temporisation (1, i, n) comprend une bascule de type D ($31_1$, $31_i$, $31_n$) produisant simultanément ledit signal de fonctionnement ($Q'_1$, $Q'_i$, $Q'_n$) à l'état logique zéro et ledit signal d'horloge retardé ($D'_1$, $D'_i$, $D'_n$), celui-ci étant la somme logique dudit signal d'horloge ($H_1$, $H_i$, $H_n$) et dudit signal de fonctionnement, l'entrée de synchronisation ($Ck'_1$, $Ck'_i$, $Ck'_n$) de ladite bascule recevant ledit signal d'horloge, l'entrée de donnée de ladite bascule recevant un signal de commande ($C'_1$,

$C'_i$, $C'_n$) dont le niveau est à un si ledit signal de sélection ($S_1$, $S_i$, $S_n$) est à zéro ou si ledit signal de fonctionnement et ledit signal d'occupation (B') sont à un.

8. Circuit de multiplexage de signaux d'horloge selon la revendication précédente, caractérisé en ce que lesdits moyens de commande (20) comprennent une porte "NON ET" recevant tous les dit signaux de fonctionnement ($Q'_1$, $Q'_i$, $Q'_n$) pour produire ledit signal d'occupation (B').

9. Circuit de multiplexage de signaux d'horloge selon la revendication 7 ou 8, caractérisé en ce que ledit module de temporisation (i) comprend une porte "NON ET" ($34_i$) recevant ledit signal de sélection ($S_i$) et un signal de validation ($V'_i$) pour produire ledit signal de commande ($C'_i$) et comprend de plus une autre porte "NON ET" ($35_i$) recevant ledit signal de fonctionnement ($Q'_i$) et ledit signal d'occupation (B') pour produire ledit signal de validation.

## Patentansprüche

1. Schaltung zum Multiplexieren von Taktsignalen, die von mindestens einem Wählsignal gesteuert wird und einen unveränderlichen Umschaltpegel besitzt, der einer der beiden Pegel dieser Taktsignale ist, wobei die Schaltung für jedes Taktsignal ($H_1$, $H_i$, $H_n$) einen Zeitverzögerungsmodul (1, i, n) aufweist, der ein verzögertes Taktsignal ($D_1$, $D_i$, $D_n$) erzeugt, das den Wert dieses Taktsignals bei einem ersten Zustand eines Wählsignals ($S_1$, $S_i$, $S_n$) und bei Fehlen eines Belegungssignals (B, B') annimmt, sobald ein Umschaltpegel des Taktsignals auftritt, und der, wenn sich das Wählsignal in einem zweiten Zustand befindet, das verzögerte Taktsignal unterbricht, sobald ein Umschaltpegel des Taktsignals auftritt, und wobei die Schaltung Steuermittel (20), die das Belegungssignal (B, B') erzeugen, sobald ein Verzögerungsmodul ein verzögertes Taktsignal erzeugt, und Mittel zum Erzeugen des vom gewählten Zeitverzögerungsmodul ausgegebenen verzögerten Taktsignals ($D_1$, $D_i$, $D_n$) als Ausgangssignal (HS) aufweist.

2. Schaltung zur Multiplexierung von Taktsignalen nach Anspruch 1, dadurch gekennzeichnet, daß ein Wählsignal ($S_1$, $S_i$, $S_n$) jedem der Taktsignale ($H_1$, $H_i$, $H_n$) zugeordnet ist.

3. Schaltung zur Multiplexierung von Taktsignalen nach Anspruch 1 oder 2, dadurch gekennzeichnet, daß jeder Zeitverzögerungsmodul ein Betriebssignal ($Q_1$, $Q_i$, $Q_n$) zur gleichen Zeit aussen-

det, zu der er das verzögerte Taktsignal ($D_1$, $D_i$, $D_n$) erzeugt, und daß die Steuermittel das Belegungssignal (B, B') erzeugen, falls ein Betriebssignal vorliegt.

4. Schaltung zur Multiplexierung von Taktsignalen nach einem beliebigen der vorhergehenden Ansprüche, dadurch gekennzeichnet, daß, wenn der Umschaltpegel der untere Pegel ist, jeder Zeitverzögerungsmodul (1, i, n) eine Kippstufe vom D-Typ ($21_1$, $21_i$, $21_n$) aufweist, die das Betriebssignal ($Q_1$, $Q_i$, $Q_n$) mit Logikzustand "1" und das verzögerte Taktsignal erzeugt, wobei letzteres das logische Produkt des Betriebssignals ($Q_1$, $Q_i$, $Q_n$) und des Taktsignals ($H_1$, $H_i$, $H_n$) ist und wobei der Synchronisiereingang ($Ck_1$, $Ck_i$, $Ck_n$) der Kippstufe das Komplement des Taktsignals und der Dateneingang der Kippstufe ein Steuersignal ($C_1$, $C_i$, $C_n$) empfängt, dessen Pegel den Wert 1 hat, wenn das Wählsignal ($S_1$, $S_i$, $S_n$) vorliegt und wenn das Betriebssignal oder das Komplement des Belegungssignals den Pegel 1 hat.

5. Schaltung zur Multiplexierung von Taktsignalen nach dem vorhergehenden Anspruch, dadurch gekennzeichnet, daß die Steuereinrichtungen (20) ein ODER-Tor aufweisen, das alle Betriebssignale ($Q_1$, $Q_i$, $Q_n$) zum Erzeugen des Belegungssignals (B) empfangen.

6. Schaltung zur Multiplexierung von Taktsignalen nach Anspruch 4 oder 5, dadurch gekennzeichnet, daß der Verzögerungsmodul (i) ein UND-Tor ($24_i$), das das Wählsignal ($S_i$) und ein Freigabesignal ($V_i$) empfängt, um das Steuersignal ($C_i$) zu erzeugen, und weiter ein ODER-Tor ($25_i$) aufweist, das das Betriebssignal ($Q_i$) und das Komplement des Belegungssignals (B) empfängt, um das Freigabesignal zu erzeugen.

7. Schaltung zur Multiplexierung von Taktsignalen nach einem beliebigen der Ansprüche 1 bis 3, dadurch gekennzeichnet, daß, wenn der Umschaltpegel den oberen Wert besitzt, jeder der Zeitverzögerungsmoduln (1, i, n) eine Kippstufe vom D-Typ ($31_1$, $31_i$, $31_n$) aufweist, die gleichzeitig das Betriebssignal ($Q'_1$, $Q'_i$, $Q'_n$) mit Logikzustand 0 und das verzögerte Taktsignal ($D'_1$, $D'_i$, $D'_n$) erzeugt, wobei letzteres die logische Summe des Taktsignals ($H_1$, $H_i$, $H_n$) und des Betriebssignals ist und wobei der Synchronisiereingang ($Ck'_1$, $Ck'_i$, $Ck'_n$) der Kippstufe das Taktsignal empfängt und der Dateneingang der Kippstufe ein Steuersignal ($C'_1$, $C'_i$, $C'_n$) empfängt, dessen Pegel den Wert 1 hat, wenn das Wählsignal ($S_1$, $S_i$, $S_n$) 0 ist oder wenn das Betriebssignal und das Belegungssignal (B') den Wert 1 haben.

8. Schaltung zur Multiplexierung von Taktsignalen nach dem vorhergehenden Anspruch, dadurch gekennzeichnet, daß die Steuermittel (20) ein UND-NICHT-Tor aufweisen, das alle Betriebssignale $(Q'_1, Q'_i, Q'_n)$ empfängt, um das Belegungssignal $(B')$ zu erzeugen.

9. Schaltung zur Multiplexierung von Taktsignalen nach Anspruch 7 oder 8, dadurch gekennzeichnet, daß der Zeitverzögerungsmodul $(_i)$ ein UND-NICHT-Tor $(34_i)$, das das Wählsignal $(S_i)$ und ein Freigabesignal $(V'_i)$ empfängt, um das Steuersignal $(C'_i)$ zu erzeugen, und außerdem ein weiteres UND-NICHT-Tor $(35_i)$ aufweist, das das Betriebssignal $(Q'_i)$ und das Belegungssignal $(B')$ empfängt, um das Freigabesignal zu erzeugen.

**Claims**

1. Clock signal multiplexing circuit controlled by at least one selection signal, having an invariant switching level which is one of the two levels of these clock signals, which comprises for each clock signal $(H_1, H_i, H_n)$ a time-delay module $(1, i, n)$ producing a delayed clock signal $(D_1, D_i, D_n)$ assuming the value of this clock signal for a first state of a selection signal $(S_1, S_i, S_n)$ and in the absence of a busy signal $(B, B')$ immediately a switching level of said clock signal occurs and interrupting said delayed clock signal when said selection signal is in a second state immediately a switching level of said clock signal occurs, control means (20) producing said busy signal $(B, B')$ immediately a time-delay module produces a delayed clock signal, and means for producing as an output signal (HS) the delayed clock signal $(D_1, D_i, D_n)$ from the selected time-delay module.

2. Clock signal multiplexing circuit according to claim 1 characterised in that a selection signal $(S_1, S_i, S_n)$ is associated with each of said clock signals $(H_1, H_i, H_n)$.

3. Clock signal multiplexing circuit according to claim 1 or claim 2 characterised in that, each time-delay module issuing an operating signal $(Q_1, Q_i, Q_n)$ at the same time as it produces said delayed clock signal $(D_1, D_i, D_n)$, said control means produce said busy signal $(B, B')$ if one said operating signal is present.

4. Clock signal multiplexing circuit according to any one of the preceding claims characterised in that, said switching level being the low level, each of said time-delay modules $(1, i, n)$ comprises a type D flip-flop $(21_1, 21_i, 21_n)$ producing said operating signal $(Q_1, Q_i, Q_n)$ a logic "1" and said delayed clock signal, the latter being the Boolean product of said operating signal $(Q_1, Q_i, Q_n)$ and said clock signal $(H_1, H_i, H_n)$, the synchronisation input $Ck_1$, $Ck_i$, $Ck_n)$ of said flip-flop receiving the complement of said clock signal, the data input of said flip-flop receiving a control signal $(C_1, C_i, C_n)$ whose level is at "1" if said selection signal $(S_1, S_i, S_n)$ is present and if said operating signal or the complement of said busy signal is at "1".

5. Clock signal multiplexing circuit according to the preceding claim characterised in that said control means (20) comprise an "OR" gate receiving all said operating signals $(Q_1, Q_i, Q_n)$ to produce said busy signal (B).

6. Clock signal multiplexing circuit according to claim 4 or claim 5 characterised in that said time-delay signal [sic] $(_i)$ comprises an "AND" gate $(24_i)$ receiving said selection signal $(S_i)$ and an enabling signal $(V_i)$ to produce said control signal $(C_i)$ and further comprises an "OR" gate $(25_i)$ receiving said operating signal $(Q_i)$ and the complement of said busy signal (B) to produce said enabling signal.

7. Clock signal multiplexing circuit according to any one of claims 1 to 3 characterised in that, said switching level being the high level, each of said time-delay modules $(1, i, n)$ comprises a type D flip-flop $(31_1, 31_i, 31_n)$ simultaneously producing said operating signal $(Q_1, Q_i, Q_n)$ at logic "0" and said delayed clock signal $(D_1, D_i, D_n)$, the latter being the Boolean sum of said clock signal $(H_1, H_i, H_n)$ and said operating signal, the synchronisation input $(Ck_1, Ck_i, Ck_n)$ of said flip-flop receiving said clock signal, the data input of said flip-flop receiving a control signal $(C'_1, C'_i, C'_n)$ which is at level "1" if said selection signal $(S_1, S_i, S_n)$ is at "0" or if said operating signal and said busy signal $(B')$ are at "1".

8. Clock signal multiplexing circuit according to the preceding claim characterised in that said control means (20) comprise a "NAND" gate receiving all said operating signals $(Q'_1, Q'_i, Q'_n)$ to produce said busy signal $(B')$.

9. Clock signal multiplexing circuit according to claim 7 or claim 8 characterised in that said time-delay module $(i)$ comprises a "NAND" gate $(34_i)$ receiving said selection signal $(S_i)$ and an enabling signal $(V'_i)$ to produce said control signal $(C'_i)$ and further comprises another "NAND" gate $(35_i)$ receiving said operating signal $(Q'_i)$ and said busy signal $(B')$ to produce said enabling signal.

# FIG.1

# FIG.2

# FIG.3

# FIG.4

## FIG.5